(19) Europäisches Patentamt
European Patent Office
Office européen des brevets

(11) EP 2 509 785 B1

(12) FASCICULE DE BREVET EUROPEEN

(45) Date de publication et mention de la délivrance du brevet:
**02.02.2022 Bulletin 2022/05**

(21) Numéro de dépôt: **10803112.1**

(22) Date de dépôt: **07.12.2010**

(51) Classification Internationale des Brevets (IPC):
***B32B 5/26*** *(2006.01)* ***E04B 1/78*** *(2006.01)*

(52) Classification Coopérative des Brevets (CPC):
**E04B 1/7662; B32B 5/26; E04B 1/80;**
B32B 2307/3065; E04B 2001/745; E04B 2001/746;
Y02A 30/00; Y02A 30/244; Y02B 30/90;
Y02E 50/10; Y02E 50/30

(86) Numéro de dépôt international:
**PCT/FR2010/052635**

(87) Numéro de publication internationale:
**WO 2011/070290 (16.06.2011 Gazette 2011/24)**

# (54) MATERIAU DE PROTECTION ET/OU DE COMBUSTION ET PROCEDE DE FABRICATION CORRESPONDANT

SCHUTZ- UND/ODER BRENNMATERIAL UND ZUGEHÖRIGES HERSTELLUNGSVERFAHREN

PROTECTIVE AND/OR COMBUSTIVE MATERIAL AND CORRESPONDING MANUFACTURE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2009 FR 0958709**

(43) Date de publication de la demande:
**17.10.2012 Bulletin 2012/42**

(73) Titulaire: **A.P.C.A. (Assemblee permanente des Chambres d'Agriculture)**
**75008 Paris (FR)**

(72) Inventeurs:
- **CASTANDET, Michel, Jean**
  **F-76000 Rouen (FR)**
- **SAIAH, Redouan**
  **F-76000 Rouen (FR)**
- **BESNIER, Jean-Baptiste, Dominique**
  **F-27240 Damville (FR)**
- **GATTIN, Richard, Clovis, Daniel**
  **F-76520 Montmain (FR)**

(74) Mandataire: **Weber, Jean-François et al**
**Cabinet Didier Martin**
**Les Terrasses des Bruyères -Bâtiment C**
**314 C Allée des Noisetiers**
**69760 Limonest (FR)**

(56) Documents cités:
**EP-A1- 0 756 930**
**DE-A1- 10 130 571**
**DE-A1- 19 546 400**
**DE-U1- 20 019 369**
**FR-A1- 2 932 511**
**US-A- 4 573 987**
**US-A- 6 124 222**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 509 785 B1

## Description

### DOMAINE TECHNIQUE

La présente invention se rapporte au domaine technique général des matériaux de construction, notamment des matériaux de construction ayant des propriétés isolantes, par exemple pour l'isolation thermique et/ou phonique, ou des matériaux de protection tels que les matériaux d'emballage par exemple.

La présente invention concerne plus particulièrement un matériau de protection et/ou de combustion, notamment de protection thermique et/ou de protection contre des chocs ou des dégradations, comprenant au moins une première couche composée d'au moins une première fibre et au moins une deuxième couche composée d'au moins une deuxième fibre, lesdites première et deuxième couches étant destinées à remplir, au moins en partie, une fonction de protection et/ou de combustion.

La présente invention concerne également un procédé de fabrication d'un matériau de protection et/ou de combustion, notamment de protection thermique et/ou de protection contre des chocs ou des dégradations, comprenant une première étape de fabrication d'au moins une première couche composée d'au moins une première fibre et une deuxième étape de fabrication d'au moins une deuxième couche composée d'au moins une deuxième fibre, lesdites première et deuxième couches étant destinées à remplir, au moins en partie, une fonction de protection et/ou de combustion.

### TECHNIQUE ANTERIEURE

Il est classique d'avoir recours à des matériaux d'isolation en vue généralement d'insonoriser, au moins en partie, un bâtiment et/ou en vue de réduire les pertes énergétiques de ce dernier.

Parmi les différents types de matériaux d'isolation connus, il est classique d'avoir recours à la laine de verre, notamment pour l'isolation de toiture, de murs, de cloisons ou de planchers. La laine de verre, qui se présente classiquement comme un matelas souple de plusieurs couches juxtaposées de fibres de verre très fines, est introduite le plus souvent entre deux cloisons d'un bâtiment en vue d'isoler ce dernier.

La laine de verre est reconnue comme étant un isolant thermique efficace avec une conductivité thermique de l'ordre de 0,035 à 0,040 W/m.K. Elle présente en outre l'intérêt d'être particulièrement résistante au feu et bon marché.

Il est par ailleurs possible, alternativement, d'utiliser la laine de roche, conditionnée généralement sous forme de plaques ou de rouleaux, en tant qu'isolant thermique et acoustique dans le domaine de la construction et du bâtiment, en particulier pour les planchers de greniers.

Tout comme la laine de verre, la laine de roche présente des propriétés isolantes thermiques intéressantes avec une faible conductivité thermique de l'ordre de 0,040 W/m.K. Elle présente également un faible coût et est majoritairement réalisée avec des matériaux facilement disponibles.

Cependant, l'utilisation de la laine de verre et/ou de la laine de roche, alors même qu'elle produit certaines propriétés d'isolation intéressantes, n'en présente pas moins un certain nombre d'inconvénients.

En effet, la laine de verre et la laine de roche sont constituées de fibres susceptibles de devenir volatiles et d'être inhalées par le manipulateur au moment de la manipulation et de la découpe de la laine de verre ou de roche. Une telle inhalation peut parfois s'avérer toxique pour le manipulateur voire même entraîner des lésions au niveau des poumons de ce dernier. Ces poussières de laine de verre ou de laine de roche ont ainsi certaines conséquences néfastes sur la santé du manipulateur. Par conséquent, il peut être conseillé de porter un masque de protection lors de la manipulation de ces matériaux, cette dernière nécessitant en particulier des précautions particulières pour limiter la désolidarisation trop importante des fibres et la formation de poussières de fibres nocives. En outre, il convient de nettoyer le lieu de la manipulation avec des filtres absolus, en humidifiant l'air ambiant et le sol et en évitant absolument tout balayage susceptible de remettre en suspension dans l'air les fibres volatiles de ces matériaux.

De surcroît, ces matériaux sont sensibles à l'humidité qui peut avoir tendance à altérer leurs propriétés d'isolant thermique.

Par ailleurs, ces matériaux ne sont généralement pas recyclés, d'une part en raison d'un manque de réseaux organisés pour leur récupération et leur recyclage ultérieur, et d'autre part en raison de la présence de certaines substances toxiques qu'ils sont susceptibles de contenir, par exemple des résines phénoplastes dans la laine de roche.

Enfin, les différentes couches de fibres de la laine de verre peuvent avoir tendance à se désolidariser les unes des autres rendant alors la laine de verre plus difficilement manipulable.

### EXPOSE DE L'INVENTION

Les objets assignés à l'invention visent par conséquent à porter remède aux différents inconvénients énumérés précédemment et à proposer un nouveau matériau de protection et/ou de combustion bon marché, non toxique et présentant une bonne tenue intrinsèque.

Un autre objet de l'invention vise à proposer un nouveau matériau de protection et/ou de combustion intégralement naturel et particulièrement respectueux de l'environnement.

Un autre objet de l'invention vise à proposer un nouveau matériau de protection et/ou de combustion dont les éléments constitutifs sont facilement disponibles et recyclables.

Un autre objet de l'invention vise à proposer un nouveau matériau de protection et/ou de combustion qui présente des qualités d'isolation et de protection particulièrement avantageuses.

Un autre objet de l'invention vise à proposer un nouveau matériau de protection et/ou de combustion qui soit à la fois solide, difficilement cassable et également bon isolant.

Un autre objet de l'invention vise à proposer un nouveau matériau de protection et/ou de combustion respectueux de l'environnement et de la santé humaine.

Un autre objet de l'invention vise à proposer un nouveau matériau de protection et/ou de combustion utilisable dans le domaine de la construction et/ou de l'emballage et/ou du rangement et/ou de la combustion.

Un autre objet de l'invention vise à proposer un nouveau procédé de fabrication d'un matériau de protection et/ou de combustion permettant d'obtenir de manière simple et bon marché un matériau de protection et/ou de combustion non toxique et présentant une bonne tenue intrinsèque.

Un autre objet de l'invention vise à proposer un nouveau procédé de fabrication d'un matériau de protection et/ou de combustion comprenant des étapes de réalisation simples et rapides à mettre en œuvre.

Un autre objet de l'invention vise à proposer un nouveau procédé de fabrication d'un matériau de protection et/ou de combustion qui soit fiable et reproductible.

Un autre objet de l'invention vise à proposer un nouveau procédé de fabrication d'un matériau de protection et/ou de combustion permettant l'obtention d'un matériau présentant une excellente tenue de ses éléments constitutifs ainsi que des propriétés d'isolation particulièrement sûres.

Les objets assignés à l'invention sont atteints à l'aide d'un matériau de protection et/ou de combustion, notamment de protection thermique et/ou de protection contre des chocs ou des dégradations, conforme à l'objet de la revendication 1.

Les objets assignés à l'invention sont également atteints à l'aide d'un procédé de fabrication d'un matériau de protection et/ou de combustion, notamment de protection thermique et/ou de protection contre des chocs ou des dégradations, conforme à l'objet de la revendication 11.

## DESCRIPTIF SOMMAIRE DES DESSINS

D'autres objets et avantages de l'invention apparaîtront plus en détails à la lecture de la description qui suit, ainsi qu'à l'aide des dessins annexés, donnés à titre purement illustratif et non limitatif, dans lesquels :

- La figure 1 illustre, selon une vue schématique en coupe transversale, un matériau de protection et/ou de combustion sous forme de plaque et conforme à la présente invention, selon un premier mode de réalisation préférentiel.
- La figure 2 illustre, selon une vue schématique en coupe transversale, un matériau de protection et/ou de combustion sous forme de plaque et conforme à la présente invention, selon un deuxième mode de réalisation préférentiel.
- La figure 3 illustre, selon une vue schématique en coupe transversale, un matériau de protection et/ou de combustion sous forme de plaque et conforme à la présente invention, selon un troisième mode de réalisation préférentiel.
- La figure 4 illustre, selon une vue en perspective de face et de dessus, un matériau de protection et/ou de combustion sous forme de plaque et conforme au deuxième mode de réalisation préférentiel illustré à la figure 2.
- La figure 5 illustre, selon une vue en perspective de côté, un matériau de protection et/ou de combustion sous forme de plaque et conforme au troisième mode de réalisation préférentiel illustré à la figure 3.
- La figure 6 illustre, selon une vue schématique, un appareil de mesure de la conductivité thermique d'un matériau de protection et/ou de combustion conforme à la présente invention.

## MEILLEURE MANIERE DE REALISER L'INVENTION

La présente invention concerne un matériau de protection et/ou de combustion 1, notamment de protection thermique et/ou de protection contre des chocs ou des dégradations.

Dans un premier mode de réalisation avantageux, il s'agit avantageusement d'un matériau de construction isolant utilisé par exemple dans le bâtiment pour protéger et isoler des murs, plafonds, sols, cloisons et/ou planchers, contre le bruit, l'eau, l'air et/ou les variations de températures, cette liste n'étant pas exhaustive, c'est-à-dire un matériau destiné par exemple à limiter sa traversée par différents éléments, notamment par le bruit, la chaleur ou le froid. De préférence, le matériau protection et/ou de combustion 1 de la présente invention constitue un matériau composite de construction conçu pour l'isolation thermique des bâtiments. Le matériau 1 permet ainsi avantageusement de limiter voire d'éviter la diffusion des variations de températures, notamment à travers un mur ou une cloison qui le comprend. Il confère également de préférence une protection mécanique aux murs ou cloisons dans lesquels il est disposé. Le matériau protection et/ou de combustion 1 présente également avantageusement certaines propriétés d'isolation phonique, en limitant la diffusion des sons.

Dans un deuxième mode de réalisation avantageux, le matériau 1 de l'invention constitue un matériau d'emballage et/ou de calage, c'est-à-dire un matériau utilisé pour emballer des objets et/ou pour protéger des objets fragiles disposés dans un emballage. Il permet avantageusement de protéger lesdits objets contre des chocs, par exemple des coups, ou contre des dégradations telles que l'humidité ou la poussière. Alternativement, il est également possible que le matériau d'emballage constitue un matériau d'emballage thermique garantissant une isolation thermique à un objet, un tel matériau d'isolation thermique pouvant être utilisé par exemple pour la fabrication d'un récipient culinaire dont le contenu nécessite une protection thermique (cf. thermos).

Dans un troisième mode de réalisation préféré, le matériau de protection et/ou de combustion 1 constitue un matériau de recouvrement protecteur conçu pour être utilisé dans le domaine des classeurs de rangement. Dans ce cas, le matériau 1 de l'invention est utilisé, de préférence, principalement pour la réalisation des pochettes sensiblement solides conçues pour la protection et le classement de documents.

Dans un quatrième mode de réalisation, le matériau de protection et/ou de combustion 1 constitue avantageusement un matériau de chauffage destiné à être utilisé en tant que combustible. Dans ce dernier cas, le matériau 1 de l'invention prend avantageusement la forme d'une brique, d'une bûche ou d'une bûchette de chauffage, ou d'un simple cylindre ou parallélépipède, par exemple de la forme d'un morceau de charbon, destiné à être enflammé et utilisé pour le chauffage ou la cuisson des aliments, par exemple pour l'utilisation d'un barbecue, d'une cheminée ou d'une chaudière.

Dans la suite de la description, essentiellement pour des raisons de concision et de clarté, on s'attachera à décrire de préférence un matériau d'isolation 1 conforme au premier mode de réalisation, étant entendu que cette description est applicable à tous les autres modes de réalisation susvisés.

Le matériau de protection et/ou de combustion 1, de préférence le matériau d'isolation 1, de l'invention est préférentiellement un matériau composite. Au sens de *« composite »* on entend un matériau composé de différents éléments dont l'assemblage confère au matériau des propriétés sensiblement améliorées par rapport à celles de chacun des éléments prises individuellement. Le matériau d'isolation 1 est donc préférentiellement composé de plusieurs couches.

Le matériau d'isolation 1 comprend au moins une première couche 2 composée d'au moins une première fibre et au moins une deuxième couche 3 composée d'au moins une deuxième fibre, lesdites première et deuxième couches 2, 3 étant destinées à remplir, au moins en partie, une fonction de protection et/ou de combustion.

Au sens de « *fibre* », on entend avantageusement un groupe de fibres, le terme *« fibre »* s'entendant de manière générale pour définir un ensemble de fibres de même nature. Plus généralement, au sens de « *fibre* », on entend une matière cellulosique contenue dans un végétal.

En d'autres termes, le matériau d'isolation 1 de l'invention comprend plusieurs strates elles-mêmes constituées de fibres c'est-à-dire de faisceaux ou d'éléments sensiblement allongés, nombreux, dont la longueur est supérieure au diamètre et dont l'aspect est filamenteux. De préférence, les couches 2, 3 constituent des couches d'isolation 2, 3 et sont de taille et de forme variables, en fonction des dimensions et de la forme souhaitées pour le matériau d'isolation 1.

Dans un mode de réalisation avantageux, lesdites couches d'isolation 2, 3 se présentent sous forme de plaques ou de matelas fibreux donc la souplesse varie en fonction de la nature, de la longueur et de la granulométrie des fibres de chaque couche d'isolation 2, 3. Dans ce mode de réalisation, le matériau d'isolation 1 se présente sous la forme de plaques sensiblement parallélépipédiques dont les dimensions varient en fonction de l'utilisation du matériau d'isolation 1. De préférence, lesdites couches d'isolation 2, 3 ont une épaisseur totale sensiblement comprise entre 3 et 25 cm, de préférence entre 5 et 15 cm, de préférence sensiblement inférieure à 7 cm, de préférence sensiblement égale à 5 cm. Dans le cas d'une utilisation comme matériau de construction isolant, le matériau d'isolation 1 présente une largeur sensiblement identique à sa longueur et sensiblement comprise entre 1 m et 3 m, de préférence sensiblement égale à 1,8 m. Alternativement, dans le cas où le matériau 1 est un matériau de calage, lesdites couches 2, 3 ont des dimensions (longueur et largeur) au moins égales à 20 cm, et une épaisseur également sensiblement comprise entre 3 et 25 cm. Il est également parfaitement envisageable que les couches 2, 3 ne soient pas des plaques, mais d'une autre forme géométrique ou non, en particulier selon la nature et les dimensions d'un support sur lequel elles pourraient être déposées. De préférence, lesdites première et deuxième fibres sont d'origine naturelle. Les fibres introduites dans les première et deuxième couches d'isolation sont donc avantageusement issues de substances naturelles, c'est-à-dire qu'elles sont obtenues ou produites en l'absence quasi-totale de substances artificielles, sans utilisation d'une voie de production synthétique ou chimique.

Avantageusement, lesdites première et deuxième fibres sont d'origine végétale cellulosique et forment ainsi une matière cellulosique végétale. Chacune desdites première et deuxième fibres est donc de préférence choisie parmi au moins l'une des fibres suivantes : fibre de coton, fibre de lin, fibre de chanvre, fibre de bois ou fibre de coco. La fibre est donc préférentiellement issue de fibres libériennes dont font partie notamment les fibres de coton, de chanvre, de lin, de sisal, de kénaf, de ramie, d'agave, d'alfa, d'abaca ou de jute, cette liste n'étant pas exhaustive. La fibre libérienne est une fibre végétale connue depuis l'antiquité, contenue dans l'écorce des souches de plusieurs plantes. La substance chimique de la fibre libérienne est faite de cellulose, de graisses, de résines, de cendres, de pectine et d'autres hémicelluloses, lignine et de l'eau. La fibre libérienne est souvent obtenue par friction, craquage et sérançage, et est remarquable par sa résistance, sa force et sa flexibilité.

La fibre peut également provenir de fibre de cellulose recyclée, qui est par exemple sous forme de fibres de coton recyclé ou extraite de papier, de journaux ou de boîte à œufs en carton recyclable, notamment pour la fabrication d'un matériau pour classeurs, Il est parfaitement envisageable dans le cadre de la présente invention que chaque couche d'isolation 2, 3 comprenne avantageusement un mélange de plusieurs fibres choisies parmi celles susvisées, les fibres pouvant être semblables ou différentes d'une couche d'isolation 2, 3 à l'autre.

Alternativement, il est également possible que lesdites première et deuxième fibres proviennent de la partie centrale d'une tige d'un végétal dite « *moelle* », par exemple de la moelle de Sorgho, de sureau ou de tournesol, c'est-à-dire qu'elles soient issues de la matière végétale cellulosique. Il est également envisageable d'utiliser avantageusement une fibre extraite du liège comme source de première et/ou deuxième fibres dans lesdites première et deuxième couches 2, 3. De préférence, lesdites première et deuxième fibres sont identiques et le matériau d'isolation 1 ne comprend qu'un type de fibres naturelles dans toutes ses couches d'isolation 2, 3. Les couches d'isolation 2, 3 du matériau d'isolation 1 sont préférentiellement fabriquées à partir d'au moins une agro-ressource, par exemple une ressource naturellement disponible ou issue d'un coproduit industriel.

Ces fibres naturelles présentent donc toutes des qualités d'isolation, notamment thermique, reconnues et sont en outre choisies en fonction des propriétés particulières additionnelles attendues pour le matériau d'isolation 1, en particulier pour son imputrescibilité. Il est à noter par exemple que les fibres de chanvre résistent mieux à la putréfaction que les fibres de lin ou de coton.

Ces fibres naturelles présentent en outre l'intérêt d'être particulièrement disponibles, bon marché et facilement accessibles En particulier, certaines de ces fibres, notamment les fibres de coton, proviennent de déchets ou de coproduits non valorisables issus de certaines industries textiles. Le matériau d'isolation 1 permet donc avantageusement de valoriser des fibres difficilement réutilisables. En outre, certaines fibres, en particulier de cellulose, sont extraites de journaux, de papiers et/ou de boîtes de conditionnement recyclable, par exemple de boîtes à œufs en carton.

Alternativement, il est parfaitement envisageable qu'au moins l'une desdites première et deuxième fibres ne soit pas d'origine naturelle, et soit au contraire alors d'origine synthétique. Ainsi, les couches 2, 3 peuvent être obtenues avec d'autres fibres non naturelles, par exemple avec des fibres acryliques. Dans ce cas, les couches 2, 3 obtenues présentent une bonne tenue sensiblement comparable à celle des fibres de coton et liée à l'établissement de liaisons chimiques, notamment d'interactions faibles (liaisons faibles) entre ces fibres.

La fibre acrylique est une fibre très utilisée dans le domaine du textile, elle est produite avantageusement par la polymérisation d'une molécule d'acrylonitrile ($CH_2$=CH-CN) et se caractérise par un toucher doux et soyeux, infeutrable et par sa grande légèreté. La fibre acrylique possède en outre une stabilité aux plis, résiste aux ultraviolets et est préférentiellement employée seule ou avec des fibres de laine, de coton, de soie ou une autre fibre synthétique.

De préférence, lesdites première et deuxième couches d'isolation 2, 3 présentent des propriétés sensiblement différentes l'une de l'autre, de telle sorte que ledit matériau présente une évolution de ses propriétés entre lesdites première et deuxième couches d'isolation 2, 3.

De préférence, les couches d'isolation 2, 3 ont des structures et des densités sensiblement différentes, le matériau d'isolation 1 présentant dès lors un gradient de densité et de structure entre ces couches d'isolation 2, 3.

Dans un mode de réalisation particulièrement avantageux du matériau d'isolation 1, la granulométrie de la deuxième fibre est sensiblement supérieure à la granulométrie de la première fibre, de telle sorte que ledit matériau présente un gradient de granulométrie entre lesdites première et deuxième couches. Au sens de « *granulométrie* » desdites premières et deuxièmes fibres, on entend les dimensions de ces dernières, notamment leur taille, leur longueur et leur diamètre. En d'autres termes, la deuxième fibre présente une longueur et/ou un diamètre sensiblement supérieur(e) à celle(celui) de la première fibre. De préférence, la longueur desdites première et deuxième fibres est sensiblement comprise entre 1 mm et 20 cm, de préférence sensiblement comprise entre 1 mm et 5 cm tandis que leur diamètre est sensiblement compris entre 2 et 500 $\mu$m, de manière avantageuse sensiblement compris 70 et 150 $\mu$m, de préférence sensiblement compris entre 15 et 90 $\mu$m.

La deuxième couche d'isolation 2 présente ainsi une structure avantageusement plus aérée que la structure de la première couche d'isolation 2. Dès lors, la deuxième couche d'isolation 2 est préférentiellement plus souple que la première couche d'isolation 1, afin que le matériau d'isolation 1 présente également un gradient de souplesse entre ses couches d'isolation 2, 3.

Les première et deuxième couches 2 et 3 sont maintenues ensemble par l'établissement de liaisons chimiques entre lesdites première et deuxième fibres au niveau d'une zone de contact 20 entre ces dernières. De préférence, les différentes couches d'isolation 2, 3 constitutives du matériau d'isolation 1 sont tenues, retenues ou liées l'une à l'autre, de manière stable grâce à la mise en place de liaisons chimiques directes entre lesdites première et deuxième fibres, c'est-à-dire par exemple grâce à au moins une interaction chimique permettant la création de liaisons chimiques faibles entre des atomes et/ou des molécules constitutifs(ves) de chacune desdites première et deuxième fibres. Il s'établit ainsi par exemple des liaisons hydrogènes dites également *« ponts hydrogène »* et/ou de Van der Waals entre les différentes molécules de celluloses des fibres desdites première et deuxième couches d'isolation 2, 3.

Ainsi, le matériau d'isolation 1 présente avantageusement une bonne cohésion entre les fibres de chacune des couches d'isolation 2, 3 et donc une bonne cohésion d'ensemble, les fibres qu'il contient étant bien retenues au sein dudit matériau d'isolation 1.

Les liaisons chimiques, de préférence faibles, entre la première et la deuxième fibre s'établissent avantageusement lors de l'application d'une contrainte extérieure sur lesdites couches d'isolation 2, 3. De manière préférée, lesdites liaisons chimiques s'établissent en présence d'une force de compression sensiblement comprise entre 1g/cm$^2$ à 500kg/cm$^2$ appliquée sur lesdites couches 2, 3. En d'autres termes, selon la nature de ladite au moins une fibre contenue dans chacune des couches 2, 3, une force de compression adaptée est appliquée sur les deux couches 2, 3 adjacentes pour permettre l'établissement de liaisons chimiques en nombre suffisant pour garantir la cohésion du matériau 1 et éviter notamment tout risque de détachement intempestif d'une des couches 2, 3.

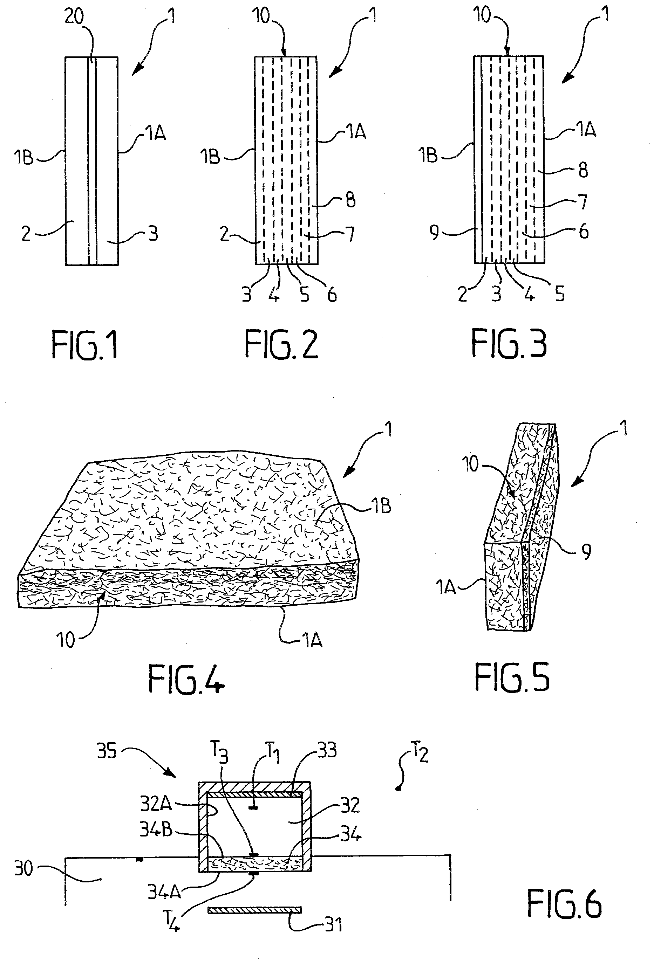

Les première et deuxième fibres desdites première et deuxième couches d'isolation 2, 3 sont mises en contact, au moins en partie, au niveau d'une zone d'interface entre lesdites première et deuxième couches 2, 3 correspondant à la zone de contact 20, telle qu'illustrée à la figure 1. Les fibres des couches d'isolation 2, 3, de préférence les fibres en contact dans la zone de contact 20, soumise à une contrainte au moins de compression, établissent alors entre elles des liaisons chimiques, lesquelles sont avantageusement des liaisons faibles, de type liaisons hydrogène et/ou de Van der Waals. Ainsi, de manière avantageuse, la création de liaisons chimiques entre les fibres de chaque couche d'isolation 2, 3 permet de garantir le maintien ensemble desdites couches d'isolation 2, 3 afin d'assurer la cohésion du matériau d'isolation 1 et d'éviter le détachement de ses couches d'isolation 2, 3. Le matériau 1 de l'invention présente donc l'intérêt d'être un matériau d'isolation, de protection, de calage et/ou de combustion, multicouche à base de fibres naturelles dont lesdites première et deuxième couches 2, 3 sont maintenues naturellement l'une avec l'autre par établissement de liaisons chimiques, de préférence des liaisons chimiques faibles (pont hydrogène ou liaison de Van der Waals), entre elles, sans l'utilisation de couche de colle intermédiaire ni d'agent compatibilisant entre lesdites couches d'isolation 2, 3.

L'établissement de telles liaisons chimiques entre les fibres des couches d'isolation 2, 3 permet d'éviter la séparation intempestive des fibres qu'elles contiennent et limiter ainsi la friabilité dudit matériau d'isolation 1.

Préférentiellement, la première couche d'isolation 2 comprend au moins un premier polysaccharide et la deuxième couche d'isolation 2 comprend au moins un deuxième polysaccharide, lesdits premier et deuxième polysaccharides étant capables d'établir des liaisons chimiques entre eux afin de contribuer au maintien stable desdites première et deuxième couches d'isolation 2, 3 entre elles. En d'autres termes, les couches d'isolation 2, 3 comprennent, en plus desdites première et deuxième fibres, des polysaccharides destinés à participer à la tenue et à la cohésion des couches d'isolation 2, 3 entre elles, notamment en établissant entre eux des liaisons chimiques faibles de type liaisons hydrogène. De préférence, les premier et deuxième polysaccharides se polymérisent entre eux, par l'établissement de liaisons chimiques entre eux, de manière à renforcer le maintien ensemble des couches d'isolation 2, 3 entre elles.

De manière préférée, les liaisons chimiques qui s'établissent entre les constituants principaux de chaque couche 2, 3 sont des liaisons faibles qui s'établissent entre les groupements hydroxyles des fibres et/ou des polysaccharides, De préférence, les liaisons faibles sont de type hydrogène et/ou de Van der Waals et s'établissent avantageusement entre les fonctions hydroxyle (OH) des fibres et/ou du liant naturel (cf. polysaccharides). De telles liaisons chimiques garantissent la tenue des couches 2, 3 entre elles et évitent d'utiliser des colles chimiques et des agents compatibilisants entre les couches.

De préférence, lesdits premier et deuxième polysaccharides sont d'origine naturelle, c'est-à-dire qu'ils sont issus, extraits ou produits à partir d'aucune substance et/ou d'aucun procédé chimiques ou artificiels.

De préférence, lesdits premier et deuxième polysaccharides sont d'origine végétale et obtenus à partir d'agroressources.

En effet, dans un mode de réalisation préférentiel, la première couche d'isolation 2 comprend une première farine à base d'au moins une première céréale et la deuxième couche d'isolation 3 comprend une deuxième farine à base d'au moins une deuxième céréale, lesdites première et deuxième céréales comprenant respectivement lesdits premier et deuxième polysaccharides.

De manière avantageuse, lesdits premier et deuxième polysaccharides sont des amidons contenus dans au moins une farine d'au moins une céréale avantageusement choisie parmi les céréales suivantes : blé, avoine, maïs, riz, orge, seigle et sorgho. De manière préférée, chacune des couches d'isolation 2, 3 comprend donc un polysaccharide, de préférence de l'amidon, apporté via une farine d'au moins une des céréales susvisées, de préférence via une farine de blé ou de riz. Ces polysaccharides sont donc avantageusement apportés à l'aide d'agro-ressources telles que sont les farines de céréales, notamment la farine de blé ou de riz.

Alternativement, il est parfaitement envisageable, sans sortir du cadre de la présente invention, que lesdits premiers polysaccharides soient des amidons extraits d'autres sources végétales, par exemple de la pomme de terre, du manioc, du pois lisse, de certains fruits, comme la banane, mais aussi de certaines racines de végétaux. Il est également possible que lesdits polysaccharides ne soient pas d'origine naturelle.

Ainsi, l'amidon des farines de céréales additionnées à chacune des couches d'isolation 2, 3 joue un rôle de liant naturel, notamment en présence d'eau, et contribue ainsi à renforcer l'intégrité et la cohésion du matériau 1. Alternativement, dans le cas où au moins une partie des fibres d'au moins une des couches d'isolation 2, 3 est apportée par de la moelle de sureau, de sorgho et/ou de tournesol, la pectine naturellement présente dans ces végétaux constitue le polysaccharide qui joue avantageusement un rôle de liant naturel en permettant la cohésion entre les couches 2, 3 qui contiennent de la pectine. Il est également possible, dans le cas où on utilise du liège comme source de fibres, que ce dernier comprenne de la subérine qui est un polysaccharide végétal naturel, en particulier un biopolymère végétal naturel, également apte à jouer un rôle de liant naturel.

Dans ces deux derniers cas particulièrement avantageux, les couches d'isolation 2, 3 peuvent être composées uniquement de fibres et de moelle de sureau, de sorgho et/ou de tournesol, et/ou de liège, la présence de farine de céréales n'étant alors pas nécessaire pour renforcer la tenue desdites couches 2, 3.

De manière particulièrement préférée, le matériau d'isolation 1 comprend plus de deux couches, de préférence au moins sept couches (cf. références 2 à 8 des figures 2 et 3), lesdites couches, qui sont préférentiellement des couches d'isolation selon le premier mode de réalisation de la présente invention, étant maintenues entre elles par l'établissement de liaisons chimiques entre les fibres d'au moins deux couches d'isolation adjacentes, et de manière préférée par l'établissement de liaisons chimiques faibles entre les fibres et/ou entre les polysaccharides contenu(e)s dans chacune des couches d'isolation 2, 3.

Alternativement, il est également envisageable que le matériau d'isolation 1 comprenne un nombre différent de couches d'isolation, par exemple un nombre compris entre 2 et 15, de préférence sensiblement compris entre 5 et 10. De manière avantageuse, les liaisons chimiques qui s'établissent entre les couches d'isolation au niveau de zones de contact (non représentées) entre lesdites couches sont des liaisons faibles, de préférence des liaisons de type hydrogène et/ou de Van der Waals qui s'établissent entre les fonctions hydroxyle des fibres et du liant naturel (cf. polysaccharides), favorisées par la présence d'eau. De préférence, lesdites couches d'isolation présentent une épaisseur totale sensiblement comprise entre 3 et 25 cm, de préférence entre 5 et 15 cm, de préférence sensiblement égale à 7 cm.

Dans le matériau d'isolation 1, il est difficile de distinguer les différentes couches d'isolation 2 à 8, ainsi qu'on peut le voir à la figure 4, le matériau d'isolation 1 formant ainsi un matelas 10 sensiblement fibreux et intègre, dont la structure évolue entre sa face supérieure 1A et sa face inférieure 1B.

De préférence, chaque couche, dans ce mode de réalisation chaque couche d'isolation (cf. références 2 à 8 de la figure 2), comprend au moins une fibre dont la longueur est sensiblement comprise entre 1 mm et 20 cm, de préférence sensiblement comprise entre 1 mm et 5 cm, et dont le diamètre est sensiblement compris entre 2 et 500 $\mu$m, de préférence sensiblement compris entre 70 et 150 $\mu$m, de préférence sensiblement compris entre 15 et 90 $\mu$m, chaque couche comprenant au moins une fibre de granulométrie sensiblement différente de celle de la fibre de la couche d'isolation qui lui est adjacente, de telle sorte que le matériau d'isolation 1 présente un gradient de granulométrie entre sa première et sa dernière couche d'isolation 2, 8.

En d'autres termes, la première couche d'isolation 2 comprend des fibres dont la granulométrie est inférieure à celle des fibres contenues dans la dernière couche d'isolation, ici la couche 8 sur les figures 2 et 3. Ainsi, la structure des couches d'isolation 2 à 8 évolue entre la première couche 2 et la dernière couche 8, notamment en termes de souplesse, de densité et de granulométrie, de telle manière que le matériau 1 présente un gradient de structure, en particulier un gradient de souplesse, de densité et de granulométrie, entre sa première et sa dernière couche d'isolation 2, 8, tout en présentant une parfaite cohésion globale.

De préférence, le matériau d'isolation 1, tel que défini par ces couches d'isolation susvisées et tel qu'illustré aux figures 1, 2 et 4 est souple et flexible, de manière à faciliter sa manipulation, par exemple lors de son introduction entre des cloisons ou entre des pans de murs. Dans le cas d'un matériau de calage et de protection, le gradient de structure du matériau 1 confère également, de manière avantageuse, des propriétés de souplesse et de rigidité qui évoluent de couche en couche. Dans le cas d'un matériau de combustion, le gradient de structure permet avantageusement de garantir une combustion lente et maîtrisée avec notamment une combustion au départ plus rapide des couches présentant une granulométrie élevée et une combustion ensuite plus lente pour les couches ayant une faible granulométrie.

Dans un mode de réalisation particulièrement avantageux, le matériau d'isolation 1 de la présente invention comprend une couche extérieure 9 présentant une épaisseur sensiblement comprise entre 1 et 20 mm, de préférence sensiblement égale à 5 mm, ladite couche extérieure 9 présentant une rigidité sensiblement supérieure à celle desdites première et deuxième couches d'isolation 2, 3, de manière à ce que le matériau présente un gradient de rigidité entre la couche extérieure 9 et lesdites première et deuxième couches d'isolation 2, 3, de préférence un gradient de rigidité entre la couche extérieure 9 et la dernière couche d'isolation 8.

De manière particulièrement préférée, la couche extérieure 9 est composée d'au moins une fibre présentant une granulométrie sensiblement inférieure à celle desdites couches d'isolation 2 à 8, la longueur et le diamètre de la fibre de la couche extérieure 9 étant respectivement sensiblement compris entre 10 μm et 5 mm et entre 2 et 500 μm, de préférence respectivement sensiblement compris entre 10 et 100 μm et entre 2 et 50 μm. De préférence, la couche extérieure 9 est en particulier composée d'au moins une poussière de fibres, par exemple des poussières végétales comprenant au moins une fibre d'origine organique ou non, choisie parmi au moins l'une des fibres suivantes : fibre de coton, fibre de lin, fibre de chanvre, fibre de bois, fibre de cellulose recyclée ou fibre de coco, cette liste n'étant pas exhaustive. Préférentiellement, la couche extérieure 9 rigide comprend de la poussière de coton, c'est-à-dire des particules très fines de coton issues de fibres de coton. Cette couche est donc elle aussi avantageusement réalisée à partir d'agro-ressources. Alternativement, la couche extérieure 9 peut comprendre un autre type de fibres, d'origine naturelle ou non, par exemple des fibres ibériennes telles que définies ci-avant.

Tel que cela est illustré aux figures 3 et 5, la couche extérieure 9, sensiblement plus dure et plus rigide que les couches d'isolation 2 à 8, se trouve avant la première couche d'isolation 2, c'est-à-dire au niveau de la couche d'isolation présentant la granulométrie la plus faible. De préférence, la couche extérieure 9 et la première couche d'isolation 2 sont maintenues ensemble grâce à l'établissement de liaisons chimiques faibles entre les fibres, préférentiellement associées à une agro-ressource, qu'elles comprennent, lesdites liaisons chimiques s'établissant grâce à l'application d'une force de compression sur lesdites couche extérieure 9 et la première couche d'isolation 2. Il est d'ailleurs parfaitement envisageable, dans un mode de réalisation avantageux, que la couche extérieure 9 soit sensiblement confondue avec ladite deuxième couche d'isolation 3, de manière à former un matériau 1 comprenant une couche 9 sensiblement rigide et une couche d'isolation 2 sensiblement souple.

Il est également envisageable que la couche extérieure 9 comprenne un polysaccharide, identique ou non à celui contenu dans la première couche d'isolation 2, de manière à ce que les polysaccharides de première couche d'isolation 2 et de la couche extérieure 9 établissent des liaisons chimiques entre eux, afin de participer au maintien desdites couches entre elles. De préférence, les agro-ressources présentes dans les couches d'isolation 2, 3 et dans la couche extérieure 9 fournissent de la poussière de fibre, des fibres et des polysaccharides qui sont capables d'établir des liaisons chimiques entre eux, de préférence des liaisons faibles, de manière à solidariser lesdites couches 2, 3 ,9 entre elles. Alternativement, il est par ailleurs possible, sans sortir du cadre de la présente invention, que la couche extérieure 9 soit liée à une autre couche d'isolation, par exemple à la dernière couche d'isolation 8, c'est-à-dire à la couche d'isolation présentant la plus grande granulométrie.

La couche extérieure 9 pourrait avantageusement être assimilée, en termes de solidité et de rigidité, à une paroi ou à une cloison de plâtre, par exemple de Placoplatre®, utilisée dans les matériaux de construction. En effet, la couche extérieure 9 par sa rigidité confère au matériau d'isolation 1 une fonction à la fois de solidité, de rigidité et de protection, tout en ayant des propriétés isolantes, notamment en raison de la présence de la poussière de fibres, par exemple d'origine organique.

Ainsi, de manière avantageuse, la couche extérieure 9 d'épaisseur sensiblement égale à 5 mm présente des qualités de résistance mécanique et de solidité sensiblement identiques ou proches de celle d'une cloison en Placoplatre®.

De préférence, la quantité massique de fibres contenue dans le matériau d'isolation 1 est sensiblement comprise entre 5 et 85%, de préférence entre 5 et 40 %, de préférence sensiblement comprise entre 10 et 25 %, de préférence sensiblement égale à 17 %. De manière avantageuse, la couche extérieure 9 sensiblement rigide comprend entre 20 et 40 % de fibres en masse, de préférence environ 30 % en masse, alors que les couches d'isolation 2, 3 formant la partie souple du matériau 1 comprennent chacune entre sensiblement 50 et 70 % en masse de fibres, de préférence environ 60 % en masse. Ces pourcentages peuvent varier, par exemple selon la nature des fibres.

De manière avantageuse, le matériau d'isolation 1 comprend entre sensiblement 1 et 85 % en masse de polysaccharides, de préférence entre sensiblement 5 et 75 %. Le matériau 1 de l'invention comprend également une quantité d'eau variant selon les quantités de fibres et de polysaccharides qu'il comprend, l'eau permettant de favoriser l'établissement des liaisons chimiques entre les fibres entre elles et entre les chaines d'amidon entre elles.

Dans un exemple de réalisation d'un matériau de protection 1 de type matériau isolant pour la construction, ce dernier comprend en pourcentage de sa masse environ 5 % de fibres de coton, 22 % de farine de blé et 73 % d'eau, avant son séchage. Après séchage, ce même matériau d'isolation 1 comprend en pourcentage de sa masse environ entre 12 et 20 % de fibres de coton et entre 60 et 88 % de farine de blé.

De préférence, le matériau d'isolation 1 comprend entre sensiblement 0,5 et 85 % d'au moins une charge minérale, de préférence d'un oxyde de titane et/ou de gypse. Le matériau 1 comprend par exemple entre sensiblement 0,5 et 8 % d'oxyde de titane qui est ajouté dans au moins l'une des couches d'isolation 2 à 8 de manière à apporter une coloration sensiblement blanche audites couches d'isolation 2 à 8, une telle coloration étant particulièrement appréciée dans les matériaux de construction. Il est également envisageable que le matériau 1 comprenne, en complément ou non du dioxyde de titane, entre sensiblement 1 et 85 %, de préférence entre sensiblement 1 et 70 % de gypse qui remplace avantageusement tout ou partie de la farine de céréales des couches d'isolation 2 à 8 et/ou de la couche extérieure 9. Le gypse renforce avantageusement le caractère ignifuge du matériau 1, de préférence en retardant l'effondrement de ce dernier en cas d'incendie.

Ainsi, le matériau d'isolation 1 est avantageusement composé uniquement d'éléments naturels et respectueux de l'environnement. Il constitue donc préférentiellement un matériau d'isolation 1 majoritairement biodégradable, de préférence intégralement biodégradable, c'est-à-dire qu'il se dégrade naturellement sans risque d'accumulation ou de pollution dans les sols et l'environnement. En effet, tous les principaux constituants du matériau d'isolation 1 de l'invention sont des agro-ressources ou extraits de ces dernières, de manière à obtenir un agro-matériau biodégradable formant le matériau 1. Les constituants du matériau 1 sont donc naturellement biodégradables, Lorsque le matériau d'isolation 1 comprend du gypse et/ou du dioxyde de titane, il devient un matériau majoritairement biodégradable et intégralement recyclable.

Le matériau d'isolation 1, avec sa couche externe 9 sensiblement rigide et ses couches d'isolation 2 à 8 présentant un gradient de structure différenciée, de préférence un gradient de granulométrie, de densité et de souplesse, constitue une demi-cloison isolante et protectrice réalisée à partir d'agro-matériaux isolants. Ce matériau d'isolation 1, utilisé par exemple dans le domaine de la construction pour la protection thermique de bâtiments, combine donc à la fois des propriétés d'isolation et de solidité. Il représente donc par exemple une alternative efficace et respectueuse de l'environnement au Placoplatre®, au Placoplatre® polystyrene qui correspond à la combinaison de plaques de Placoplatre® avec du polystyrène expansé et à la laine de verre disposée entre deux cloisons rigides, utilisés pour la construction. Il d'ailleurs envisageable que ce matériau 1 ne comprenne que la couche externe 9 rigide et une première couche d'isolation souple 2 formant un matelas fibreux souple, de manière à obtenir un gradient de granulométrie, de densité et de rigidité entre ces deux couches 2, 9.

Il est en effet possible de manière très simple d'assembler deux demi-cloisons du matériau 1, les couches extérieures 9 étant disposées à l'opposé l'une de l'autre, de manière à obtenir une cloison à la fois rigide et isolante, comprenant uniquement des éléments naturels et majoritairement biodégradables, de préférence intégralement biodégradables. En outre, ce matériau présente une épaisseur sensiblement égale à celle du Placoplatre® ou du Placoplatre® polystyrène et ne présente aucune poussière nocive ni dégagement toxique lors de sa manipulation ou de son utilisation.

Alternativement, dans le cas d'un matériau de calage ou d'emballage comprenant les couches 2, 3, 9 précitées, le gradient de structure du matériau permet d'assurer à la fois une rigidité de calage et d'emballage tout en ayant un contact plus souple avec les objets. Dans le cas d'un matériau de combustion, la couche extérieure 9 contribue à garantir une vitesse maîtrisée de la combustion. Le matériau d'isolation 1 de la présente invention a fait l'objet du test de conductivité thermique présenté ci-dessous.

Test de conductivité thermique

Ce test de conductivité thermique a été mis en place afin d'évaluer les propriétés d'isolation thermique du matériau d'isolation 1, conformément au premier mode de réalisation précédemment décrit.

Matériel et méthode

La « *méthode des boîtes* » a été utilisée pour déterminer conductivité thermique ($\lambda$) et la diffusivité de deux échantillons de matériaux d'isolation 1 conformes dont la composition, en pourcentage massique, après séchage est la suivante :

- Echantillon 1 *« Ficot1* » : 16,7 % de fibres de coton et 83,3 % de farine de blé,
- Echantillon 2 « *Ficot.Gy5* » : 16,7 % de fibres de coton, 25 % de farine de blé et 58,3 % de gypse.

Ces deux échantillons sont comparés avec un échantillon de polystyrène expansé qui constitue un témoin positif. Tous les échantillons ont une longueur de 27 cm, une largeur de 27 cm et une épaisseur de 5 cm.

On utilise un appareil 35 représenté à la figure 6 qui a pour fonction la mise en place d'un écoulement de chaleur unidirectionnel à travers les échantillons à tester. Cet appareil comprend une enceinte 30 isolée et maintenue à une température faible grâce à un échangeur (non représenté) situé à la base de l'enceinte 30 et dans lequel circule une eau glycolée refroidie à environ -5°C par un cryostat 31. Cet appareil comprend également une boîte supérieure 32 dite « *boîte chaude* » qui comprend sur sa face interne 32A un film chauffant 33 dont l'émission de chaleur peut être contrôlée à l'aide d'un rhéostat (non représenté).

Protocole expérimental

L'échantillon de matériau 1 à tester (cf. référence 34 à la figure 6) est positionné entre la boîte supérieure 32 et l'enceinte 30, de telle manière que les flux latéraux soient négligeables. Trois mesures sont réalisées pour chacun des trois échantillons à l'aide de l'appareil 35.

La boîte supérieure 32 est chauffée et l'enceinte 30 est refroidie, ce qui crée un gradient de température, lequel permet que les échanges convectifs sur les deux faces inférieure et supérieure 34A, 34B de l'échantillon 34 soient nuls. Par réglage de l'émission de chaleur, on obtient une température ambiante $T_1$ dans la boîte supérieure 32 la plus proche possible de la température extérieure $T_2$ correspondant à la température à l'extérieure de la salle d'expérimentation.

On relève ensuite la température supérieure $T_3$ au centre de la face supérieure 34B de l'échantillon 34 et la température inférieure $T_4$ au centre de la face inférieure 34A. Une fois que le régime permanent de l'appareil est obtenu, on obtient la formule suivante :

$$P = \lambda \times [(T_3 - T_4) / e] \times S + \text{pertes parois}$$

Dans laquelle: P est la puissance électrique dont la formule est $P = U^2/R$, $\lambda$ est la conductivité thermique, S est la surface de l'échantillon 34 et e est l'épaisseur de l'échantillon 34.

Les pertes de parois se calculent selon la formule suivante :

$$\text{pertes parois} = C \times (T_1 - T_2),$$

C étant une constante de la boîte supérieure 32, on donne C = 0,16W/°C

En général, plus le matériau est isolant, c'est-à-dire plus la conductivité thermique $\lambda$ est faible, plus la perte par les parois est importante par rapport aux résultats.

Résultats

La conductivité thermique de chacun des trois échantillons est calculée à l'aide de la formule précédente et de la moyenne des trois mesures réalisées sur chacun des trois échantillons dans l'appareil. Le tableau suivant détaille ces résultats :

| | Echantillon 1 « Ficot1 » | Echantillon 2 « Ficot. Gy5 » | Echantillon Polystyrène expansé |
|---|---|---|---|
| Conductivité thermique ($\lambda$) en $W.m^{-1}.K^{-1}$ | 0,042 | 0,043 | 0,042 |

Ces résultats démontrent que la conductivité thermique obtenue avec le matériau d'isolation 1 de la présente invention est sensiblement identique à celle d'un polystyrène expansé. En outre, une valeur de conductivité thermique de 0,042 $W.m^{-1}.K^{-1}$ est également sensiblement identique à celle obtenue avec de la laine de verre ou de la laine de roche (de l'ordre de 0,040 $W/ m^{-1}.K^{-1}$).

On peut donc conclure de ce test que le matériau d'isolation 1 est aussi performant en termes d'isolation thermique que du polystyrène ou de la laine de verre. En outre, la présence de gypse dans le matériau d'isolation 1 ne semble pas affecter de manière significative la valeur de la conductivité thermique.

La présente invention concerne par ailleurs un procédé de fabrication d'un matériau de protection et/ou de combustion, notamment de protection thermique et/ou de protection contre des chocs ou des dégradations, de préférence d'un matériau sensiblement identique au matériau de protection et/ou de combustion 1 précédemment décrit.

Avantageusement, ce procédé constitue un procédé de fabrication d'un matériau composite de construction conçu pour l'isolation thermique des bâtiments, d'un matériau de protection, d'un matériau d'emballage, d'un matériau de calage, et/ou d'un matériau de recouvrement protecteur conçu pour être utilisé dans le domaine des classeurs de rangement. Alternativement, le procédé de l'invention constitue avantageusement un procédé de fabrication d'un matériau de chauffage destiné à être utilisé en tant que combustible.

Dans la suite de la description, pour des raisons de clarté et de concision, on décrira préférentiellement un procédé de fabrication d'un matériau composite de construction, selon un premier mode de réalisation, par exemple un matériau d'isolation et/ou de protection conforme à la description précédente.

Ce procédé comprend une première étape de fabrication d'au moins une première couche 2, de préférence une première couche d'isolation 2, composée d'au moins une première fibre et une deuxième étape de fabrication d'au moins une deuxième couche 3, de préférence une deuxième couche d'isolation 3 composée d'au moins une deuxième fibre, lesdites première et deuxième couches 2, 3 étant destinées à remplir, au moins en partie, une fonction de protection et/ou de combustion. Les fibres desdites couches d'isolation 2, 3 sont avantageusement identiques à celles précédemment décrites, c'est-à-dire ce sont des fibres d'origine naturelle, de préférence extraite du coton, du chanvre, du lin, du coco, du bois et/ou de la cellulose recyclée extraite par exemple de coproduits et/ou de boîtes d'œufs en carton.

Il est également envisageable, tel que précédemment décrit, que la fibre contenue dans lesdites couches d'isolation 2, 3 soit extraite du liège (chêne-liège), de la moelle d'un végétal, en particulier de la moelle de sureau, de sorgho et/ou de tournesol. Il est également parfaitement envisageable que lesdites fibres ne soient pas d'origine naturelle.

Dans un premier mode de réalisation dudit procédé, les première et deuxième étapes de fabrication desdites première et deuxième couches d'isolation 2, 3 sont avantageusement réalisées de manière dépendante l'une de l'autre. Dans ce premier mode de réalisation, la première étape de fabrication de la première couche d'isolation 2 comprend de préférence une première opération d'hydratation de ladite première fibre, au cours de laquelle une quantité d'eau déterminée en fonction de la quantité de ladite première fibre de la première couche d'isolation 2 est apportée.

De manière avantageuse, la première étape de fabrication de la première couche d'isolation 2 comprend, postérieurement à l'opération d'hydratation de ladite première fibre, une première opération de compression de ladite première fibre au cours de laquelle une pression, sensiblement comprise entre 1g/cm$^2$ à 500kg/cm$^2$, avantageusement de l'ordre de 20 à 300 g/cm$^2$, est appliquée à ladite fibre. Cette opération de compression a pour principal objectif d'assurer une cohésion entre les différents éléments constitutifs de ladite première couche d'isolation 2.

La première étape de fabrication de la première couche d'isolation 2 comprend ensuite, postérieurement à l'opération de compression de ladite première fibre, une première étape de séchage de ladite première couche d'isolation 2. De préférence, ladite première couche d'isolation 2 est soumise à une température sensiblement comprise entre 50 et 120°, de préférence sensiblement comprise entre 60 et 100°C. Avantageusement, l'étape de séchage consiste à introduire la première couche d'isolation 2 dans une étuve ventilée chauffée à 105°C pendant une durée sensiblement comprise entre 1 et 6 heures, de préférence sensiblement comprise entre 4 et 5 heures.

Ainsi, de manière avantageuse, la première étape de fabrication de la première couche d'isolation 2 comprend principalement une opération d'hydratation, une opération de compression et une opération de séchage de ladite première fibre.

Dans un mode de réalisation particulièrement préférée, la deuxième étape de fabrication de la deuxième couche d'isolation 3 comprend, postérieurement à l'étape de fabrication de la première couche d'isolation 2, sensiblement les mêmes opérations que celles réalisées pour la fabrication de ladite première couche 2, à savoir une deuxième opération d'hydratation, une deuxième opération de compression et une deuxième opération de séchage, la deuxième opération de compression faisant intervenir une force de compression sensiblement inférieure à celle appliquée dans la première opération de compression.

En effet, la deuxième fibre a de préférence une granulométrie sensiblement supérieure à celle de la première fibre, de telle sorte qu'une compression de force inférieure est suffisante pour assurer la cohésion de l'ensemble des éléments constitutifs de ladite deuxième couche d'isolation 3.

Le procédé de l'invention comprend également une étape d'établissement de liaisons chimiques, de préférence faibles, entre lesdites première et deuxième fibres au niveau d'une zone de contact 20 entre ces dernières, de manière à maintenir ensemble lesdites première et deuxième couches d'isolation 2, 3. En d'autres termes, le procédé comprend une étape permettant un assemblage desdites première et deuxième couches d'isolation 2, 3, c'est-à-dire une étape au cours de laquelle les deux couches d'isolation 2, 3 sont réunies de manière stable et efficace, afin de former un matériau présentant une bonne cohésion et tenue de ses éléments constitutifs, en particulier desdites première et deuxième fibres.

De préférence, l'étape d'établissement de liaisons chimiques entre lesdites première et deuxième fibres est sensiblement confondue avec au moins l'une des opérations intervenant dans la deuxième étape de fabrication de la deuxième couche d'isolation 3, laquelle est mise en œuvre contact avec la première couche d'isolation 2 préalablement fabriquée. En d'autres termes, c'est au cours de la deuxième étape de fabrication de la deuxième couche d'isolation 3, notamment au cours de l'opération d'hydratation, de compression et/ou de séchage, que se créent des liaisons chimiques, de préférence des liaisons chimiques faibles de type liaisons hydrogènes, dites aussi « *ponts hydrogènes* » et/ou de Van der Waals, entre la première et la deuxième fibres. Après la fabrication de la première couche d'isolation 2, la deuxième fibre est déposée directement sur la première couche d'isolation 2, de telle manière que, en présence d'eau et/ou de pression et/ou de chauffage de ladite deuxième fibre, des liaisons chimiques s'établissent entre lesdites première et deuxième fibres.

De manière particulièrement avantageuse, c'est la mise en œuvre d'une force de compression sensiblement comprise entre 1g/cm$^2$ à 500kg/cm$^2$ sur lesdites couches 2, 3 qui garantit la création de liaisons chimiques, de préférence faibles, entre les principaux éléments constitutifs de ces dernières, notamment entre lesdites première et deuxième fibres. De préférence, l'eau apportée au cours de l'étape d'hydratation favorise la création de groupements hydroxyle et favorise ainsi l'établissement de liaisons faibles entre les chaines de cellulose des fibres des deux couches d'isolation 2, 3. Le séchage, quant à lui, permet un apport de chaleur qui va favoriser une mobilité moléculaire, voire une fusion moléculaire, ayant tendance à favoriser la création de nouvelles liaisons chimiques entre les constituants de chaque couche d'isolation 2, 3, notamment entre les fibres de ces dernières.

Dans un mode de réalisation préférentiel, le procédé de l'invention comprend plusieurs étapes de fabrication de couches d'isolation, de préférence conformes aux couches d'isolation 2 à 8 décrites dans ce qui précède, pour fabriquer un matériau d'isolation comprenant au moins trois couches d'isolation 2, 3, 4, l'une au moins des opérations successives d'hydratation, de compression et de séchage appliquées aux fibres desdites au moins trois couches d'isolation 2, 3, 4 permettant l'établissement de liaisons chimiques entre les fibres d'au moins deux couches d'isolation adjacentes.

De manière avantageuse, lesdites fibres présentent une granulométrie sensiblement différente entre elles, de manière à obtenir un matériau d'isolation 1, par exemple de protection pour le bâtiment, la construction ou l'emballage, présentant un gradient de granulométrie entre sa première et sa dernière couche d'isolation 2, 8. Préférentiellement, le procédé de fabrication du matériau d'isolation 1 comprend également, préalablement à la première étape de fabrication de la première couche d'isolation 2, une étape de fabrication d'une couche extérieure 9 présentant une rigidité sensiblement supérieure à celle desdites premières et deuxième couches d'isolation 2, 3, de manière à ce que le matériau d'isolation présente un gradient de rigidité entre la couche extérieure 9 et lesdites première et deuxième couches d'isolation 2, 3.

De préférence, la couche extérieure 9 est conforme à celle précédemment décrite à savoir qu'elle est majoritairement réalisée à partir de poussières d'au moins une fibre, par exemple d'origine organique, de préférence de poussières de céréales, notamment de poussières de coton. Cette couche extérieure 9 est avantageusement réalisée de manière sensiblement identique à celle desdites couches d'isolation 2 à 8, c'est-à-dire à l'aide d'une étape d'hydratation, d'une étape de compression et d'une étape de séchage. La force de compression appliquée au cours de cette étape de compression est avantageusement sensiblement supérieure à celle appliquée au cours de la première étape de fabrication de la première couche d'isolation 2, et donc de celles appliquées au cours de toutes les autres étapes de fabrication des couches 3 à 8, de préférence sensiblement comprise entre 1g/cm$^2$ à 500kg/cm$^2$.

La première étape de fabrication de la première couche d'isolation 2 est mise en œuvre de préférence au contact de la couche extérieure 9 préalablement fabriquée, de manière à ce qu'au moins l'une desdites premières opérations d'hydratation et de séchage permette la création de liaisons chimiques entre la fibre de la couche extérieure 9 et la première fibre de la première couche d'isolation 2, lesdites liaisons chimiques permettant d'assurer le maintien ensemble desdites couche extérieure 9 et première couche d'isolation 2. L'étape de compression permet avantageusement, quant à elle, la cohésion de l'ensemble constitué par les différentes couches extérieure 9 et d'isolation 2.

Dans un deuxième mode de réalisation dudit procédé, il est également envisageable que les couches d'isolation 2 à 8 ainsi que la couche extérieure 9 soient préalablement fabriquées individuellement et indépendamment les unes des autres, chaque couche se présentant alors avantageusement comme une plaque plus ou moins rigide. Dans ce cas particulier, le procédé de l'invention consiste avantageusement à superposer tout d'abord la couche extérieure 9 avec la première couche d'isolation 2 qui a la plus faible granulométrie et à appliquer à ces dernières une opération d'hydratation, de compression et/ou de séchage pour permettre l'établissement de liaisons chimiques entre les fibres de chacune des couches extérieures 9 et d'isolation 2. De préférence, on effectue uniquement une opération de compression au cours de laquelle une première force de compression est appliquée aux deux couches 2, 9 pour assurer la cohésion de l'ensemble.

Le procédé comprend ensuite une deuxième étape d'assemblage desdites première couche d'isolation 2 et couche extérieure 9 déjà liées entre elles avec une deuxième couche d'isolation 3 qui présente une granulométrie sensiblement supérieure à celle de la première couche d'isolation 2. Cette deuxième étape d'assemblage met en œuvre une opération d'hydratation et de séchage desdites couches d'isolation 2, 3 et extérieure 9 ainsi qu'une opération de compression au cours de laquelle une deuxième force de compression sensiblement inférieure à la première force de compression est appliquée sur lesdites couches.

Dans ce deuxième mode de réalisation alternatif, on assemble de la même façon plusieurs couches d'isolation 2 à 8 présentant des granulométries différentes, de manière à obtenir le matériau d'isolation 1 présentant un gradient de structure, de préférence un gradient de granulométrie, de densité et de souplesse, la force de compression appliquée au fur et à mesure du procédé étant sensiblement inversement proportionnelle à la granulométrie des fibres des différentes couches d'isolation 2 à 8, et sensiblement comprise entre 1g/cm$^2$ à 500kg/cm$^2$.

Il est également envisageable, alternativement aux deux précédents modes de réalisation, que le procédé de fabrication du matériau d'isolation 1 soit réalisé selon un troisième mode de réalisation, majoritairement inspiré pour ses principales étapes de la méthode « *Air-laid* ».

Dans ce procédé de type « *Air-laid* », la première étape de fabrication de la première couche d'isolation 2 comprend avantageusement une première opération d'hydratation au cours de laquelle la première fibre est injectée dans une première enceinte soumise à une atmosphère humide présentant un taux d'humidité sensiblement supérieur à 80 %.

De préférence, ce procédé comprend, postérieurement à la première opération d'hydratation, une première opération de séchage au cours de laquelle la première fibre est introduite dans une deuxième enceinte soumise à une atmosphère sèche présentant d'une part une température sensiblement comprise entre 50°C et 120°C et d'autre part un taux d'humidité sensiblement inférieur à 20 %. Au cours de cette étape de séchage, la fibre subit un séchage et tombe de préférence sur un tapis de récupération, Le procédé comprend avantageusement, postérieurement à la première opération de séchage, une première opération de compression de ladite première fibre, de préférence sur le tapis de récupération.

De manière préférée, le procédé comprend en outre, avant la fin de ladite première opération de séchage, le début de la deuxième étape de fabrication de la deuxième couche d'isolation 2 au cours duquel se déroule une deuxième opération d'hydratation et de séchage, au moins partiel, d'au moins une deuxième fibre présentant une granulométrie sensiblement supérieure à celle de la première fibre.

Ce procédé comprend ensuite, postérieurement à la deuxième opération d'hydratation et de séchage de la deuxième fibre, une deuxième opération de compression, la force de compression appliquée pour la fabrication de la deuxième couche d'isolation étant avantageusement sensiblement inférieure à la force de compression appliquée pour la fabrication de la première couche d'isolation 2.

Ces deuxièmes opérations d'hydratation, de séchage et de compression sont sensiblement identiques aux premières opérations de séchage, d'hydratation et de compression pour la fabrication de la première couche d'isolation 2, la deuxième fibre tombant sur la première couche d'isolation 2 déjà fabriquée sur le tapis de récupération, de manière à permettre la création de liaisons chimiques entre lesdites première et deuxième fibres ainsi que la répartition régulière de la deuxième fibre sur la première fibre. La première opération de séchage s'achève avantageusement sensiblement en même temps que la dernière étape de séchage de la dernière couche d'isolation constitutive du matériau d'isolation 1.

Dans ce troisième mode de réalisation, le procédé continue ainsi conformément aux première et deuxième étapes précédemment décrites pour obtenir un matériau d'isolation 1 muiticouche comprenant plusieurs couches d'isolation 2 à 8 et une couche extérieure 9. Dans ce troisième mode de réalisation avantageux, le procédé est repris en boucle, de manière continue, afin d'obtenir de manière facile à mettre en œuvre industriellement un matériau multicouche à gradient de structure.

Dans ces trois modes de réalisation, il est également possible que le procédé comprenne une opération d'ajout d'au moins un premier polysaccharide à ladite première fibre et d'un deuxième polysaccharide à ladite deuxième fibre. Ces premier et deuxième polysaccharides sont de préférence sensiblement identiques à ceux précédemment décrits, c'est-à-dire qu'ils sont fournis dans les couches d'isolation 2, 3 par une farine de céréale, de préférence une farine de blé. De préférence, lesdits premier et deuxième polysaccharides sont apportés aux couches d'isolation 2, 3 avant l'étape d'hydratation. L'hydratation de l'amidon de cette farine au cours de l'étape d'hydratation permet avantageusement l'établissement de liaisons entre les différentes chaînes d'amidon qui participent ainsi à la tenue desdites couches d'isolation 2, 3 entre elles, notamment de manière complémentaire aux liaisons déjà établies entre les fibres afin d'assurer notamment une bonne cohésion des fibres entre elles. Ainsi, les opérations d'hydratation, de compression et/ou de séchage auxquelles sont soumises les deux couches d'isolation 2, 3 adjacentes permettent avantageusement d'une part de lier et d'assembler au moins en partie les fibres et les amidons desdites couches d'isolation 2, 3 et d'autre part d'assurer la cohésion d'ensemble et la bonne tenue du matériau d'isolation 1.

Alternativement, il est parfaitement envisageable, tel que susvisé, que lesdits polysaccharides soient de la pectine fournie par de la moelle d'un végétal, par exemple de sureau, de sorgho et/ou de tournesol, ou de la subérine provenant du liège. Dans ce mode de réalisation avantageux, le liège et/ou la moelle a à la fois une fonction d'isolation, de protection et/ou de combustion, par les fibres qu'il(elle) comprend et également une fonction de liant naturel grâce à la présence de subérine et/ou de pectine. Dans un autre mode de réalisation de l'invention, il pourrait donc être avantageusement envisagé de mettre uniquement des fibres et du liège ou de la moelle végétale.

De préférence, quel que soit le mode de réalisation susvisé, le procédé de l'invention comprend une opération d'ajout d'au moins une charge minérale, notamment du gypse et/ou de l'oxyde de titane conformes à ce qui précède, cette opération d'ajout se déroulant préférentiellement de manière concomitante à l'opération d'ajout des premier et deuxième polysaccharides.

De manière avantageuse, il est également envisageable que le procédé comprenne, quel que soit son mode de réalisation, une opération de chauffage. Cette opération, qui est avantageusement réalisée de manière concomitante à l'étape de compression, par exemple par l'utilisation d'une presse chauffante, permet d'accélérer la formation de liaisons chimiques entre les fibres des couches d'isolation et extérieure adjacentes.

Ainsi, les étapes de réalisation desdites couche extérieure 9 et couches d'isolation 2 à 8 permettent d'obtenir un matériau d'isolation 1, de préférence un agro-matériau, composite et multicouches comprenant un gradient de structure différenciée, de préférence un gradient de rigidité, de densité et de granulométrie entre ses couches, la couche extérieure 9 constituant la couche avec la plus grande rigidité et la plus faible granulométrie tandis que la dernière couche d'isolation 8 constituant la couche avec la plus faible rigidité et la plus grande granulométrie. De préférence, la couche extérieure 9 est rigide et sensiblement inflexible alors que le matelas 10 constitué des couches d'isolation 2 à 8 est sensiblement souple et flexible. Il est également envisageable que la couche extérieure 9 corresponde à la deuxième couche d'isolation 3 et que le matériau 1 comprenne alors deux couches de fibres, l'une sensiblement rigide formée par la couche externe 9 et une sensiblement souple formée par la première couche d'isolation 2.

Tel que cela est illustré aux figures 4 et 5, seule la couche extérieure 9 est différentiable des autres couches d'isolation 2 à 8, ces dernières formant un matelas 10 unique sans différenciation entre les couches d'isolation 2 à 8, la zone de contact 20 entre les couches d'isolation 2 à 8 étant imperceptible. On peut donc en conclure que les couches d'isolation 2 à 8 sont indissociables et non séparables les unes des autres, ce qui contribue à garantir la stabilité, la tenue, la cohésion et l'intégrité du matériau d'isolation 1.

Exemple de conception d'un carton à gradient de structure à partir d'alvéoles de boîtes d'œufs :
L'objectif de cet exemple est de montrer la fabrication d'un matériau, par exemple un matériau à gradient de structure conforme à la présente invention et destiné aux couvertures de classeurs de rangements, à partir de fibres extraites de boîtes d'œufs recyclables.

Le procédé de cet exemple correspond au deuxième mode de réalisation du procédé de l'invention tel que précédemment décrit et comprend deux phases principales :

- Une première phase (phase 1) de réalisation de différentes couches individualisées,
- Une deuxième phase (phase 2) de solidarisation de l'ensemble des couches.

Les matières premières utilisées sont :

- Alvéoles de boites à œufs
- Farine déclassée
- Eau

Matériel et méthode

- Pulpeur (cuve avec agitation - Source 1)
- Appareil à « *formette* » c'est-à-dire à couche en forme sensiblement de disque (filtre avec aspiration - Source 2)
- Presse de laboratoire (4Kg/cm$^2$ - Source 3)
- Appareil de séchage sous vide (pour la cohésion des fibres - Source 4)

Phase 1 : Applications des techniques utilisées en papeterie

La phase 1 comprend les étapes principales suivantes :

- Introduire dans un pulpeur de l'eau et des fibres cellulosiques (issues, par exemple, d'alvéoles de boites à œufs),
- Mélanger de manière à obtenir une concentration de 20g/L de matière sèche,
- Mettre en route le pulpeur pendant une minute à 1000 tr/min.

Pour constituer une « *formette* » de 20 cm de diamètre, il convient de suivre le protocole suivant :

- Diluer 750cm$^3$ de pâte dans 5 litres d'eau,
- Mettre le mélange dans l'appareil à formette,
- Faire agiter par bulles d'air pendant 20 secondes, afin de d'homogénéiser la répartition des fibres,

- Aspirer ensuite l'eau par le bas de l'appareil,

- Récupération de la formette constituée sur un papier buvard.

- Compression de la formette et du papier buvard à 4Kg/cm$^2$ pour éliminer l'excès d'eau et améliorer la cohésion des fibres,

- Séchage de la formette et du papier buvard, sous vide à 96°C,

- Retrait du papier buvard après séchage.

L'obtention du carton multicouche nécessite un minimum de 3 formettes, conçues selon le mode opératoire précédemment décrit, avec des fibres cellulosiques de granulométrie, densité et/ou souplesse différente, de manière à obtenir un matériau multicouche à gradient de structure.

Phase 2 : Réalisation d'un matériau multicouche à gradient de structure dont chaque couche correspond à une formette obtenue selon la phase 1

La phase 2 comprend les étapes principales suivantes :

- Réalisation d'un liant à base d'extrait de céréale : Faire un mélange à base d'eau et de farine déclassée, puis faire chauffer ce mélange à 90°C afin de pré-gélatiniser le mélange grâce à l'amidon contenu dans la farine. L'amidon constitue ainsi un liant naturel homogène,

- Réalisation d'un matériau multicouche : A partir des formettes obtenues au cours de la phase 1, on applique le liant entre chaque formette et on applique une force de pression sur la totalité des formettes, afin de créer des liaisons chimiques faibles entre les formettes, destinées à solidariser les formettes entre elles.

Il s'établit des liaisons faibles de type hydrogène et/ou Van Der Waals, entre les fonctions OH (hydroxyles) des fibres et des polysaccharides jouant le rôle de liant naturel, qui évitent d'utiliser des agents compatibilisants entre les couches ou des colles.

En faisant varier l'épaisseur, la granulométrie, la densité la dureté des formettes et la pression selon la densité de fibres, on obtient un matériau, de préférence un agro-matériau, à gradient de structure différencié, dont la structure évolue entre une face rigide et une face opposée souple. Un tel matériau peut par exemple être utilisé pour la fabrication de classeurs de rangement ou de pochettes de protection de documents.

Ainsi, le procédé de la présente invention permet l'obtention d'un matériau d'isolation ou de protection 1, par exemple pour la protection contre les dégradations (cf. exemple ci-avant) ou conçu pour l'isolation thermique et éventuellement phonique des bâtiments. Ce procédé comprend des étapes particulièrement simples à mettre en œuvre et facilement industrialisables. En particulier, ce procédé permet par exemple la fabrication de demi-cloisons, telle qu'illustrées aux figures 3 et 5, conçu pour à la fois créer une paroi rigide dans un bâtiment et isoler ce dernier. Ces demi-parois peuvent être assemblées deux à deux de manière à créer un matériau d'isolation 1 présentant des caractéristiques d'isolation et de rigidité sensiblement identiques à celle d'un matériau de type Placoplatre® ou Placoplatre® polystyrène, le matériau 1 de l'invention présentant en outre l'intérêt d'être complètement naturel et recyclable, et majoritairement voire intégralement biodégradable.

En effet, ce procédé garantit l'obtention d'un matériau d'isolation, de protection, pour le classement, pour le calage et/ou l'emballage 1 issu d'agro-ressources, naturel, majoritairement biodégradable et donc particulièrement respectueux de l'environnement et de la santé humaine. Enfin, ce procédé permet l'obtention d'un matériau intègre, présentant une parfaite cohésion d'ensemble, peu friable et ne formant pas de poussières toxiques lors de sa manipulation ou de sa découpe.

POSSIBILITE D'APPLICATION INDUSTRIELLE

L'invention trouve son application industrielle dans la fabrication et la mise en œuvrede matériaux de protection et/ou de combustion, notamment de protection thermique et/ou de protection contre des chocs ou des dégradations.

## Revendications

1. - Matériau de protection et/ou de combustion (1), notamment de protection thermique et/ou de protection contre des chocs ou des dégradations, comprenant au moins une première couche (2) composée d'au moins une première fibre et au moins une deuxième couche (3) composée d'au moins une deuxième fibre, lesdites première et deuxième couches (2, 3) étant destinées à remplir, au moins en partie, une fonction de protection et/ou de combustion, **caractérisé en ce que** lesdites première et deuxième fibres sont d'origine naturelle et les première et deuxième couches (2, 3) sont maintenues ensemble par l'établissement de liaisons chimiques directes entre lesdites première et deuxième fibres au niveau d'une zone de contact (20) entre ces dernières, la deuxième fibre étant déposée directement sur la première couche (2), les première et deuxième fibres desdites première et deuxième couches d'isolation (2, 3) étant mises en contact, au moins en partie, au niveau d'une zone d'interface entre lesdites première et deuxième couches (2, 3) correspondant à la zone de contact (20), sans l'utilisation de couche de colle intermédiaire ni d'agent compatibilisant entre lesdites couches (2, 3).

**2.** - Matériau de protection et/ou de combustion (1) selon la revendication 1 **caractérisé en ce que** la granulométrie de la deuxième fibre est sensiblement supérieure à la granulométrie de la première fibre, de telle sorte que ledit matériau (1) présente un gradient de granulométrie entre lesdites première et deuxième couches (2, 3).

**3.** - Matériau de protection et/ou de combustion (1) selon l'une des revendications précédentes **caractérisé en ce que** la première couche (2) comprend au moins un premier polysaccharide et la deuxième couche (3) comprend au moins un deuxième polysaccharide, lesdits premier et deuxième polysaccharides étant capables d'établir des liaisons chimiques entre eux afin de contribuer au maintien desdites première et deuxième couches (2, 3) entre elles.

**4.** - Matériau de protection et/ou de combustion (1) selon la revendication précédente **caractérisé en ce que** les liaisons chimiques sont des liaisons faibles qui s'établissent entre les groupements hydroxyles des fibres et/ou des polysaccharides.

**5.** - Matériau de protection et/ou de combustion (1) selon l'une des revendications précédentes **caractérisé en ce qu'**il comprend plus de deux couches (2, 3), de préférence au moins sept couches (2, 3, 4, 5, 6, 7, 8), lesdites couches (2, 3, 4, 5, 6, 7, 8) étant maintenues entre elles par l'établissement de liaisons chimiques entre les fibres d'au moins deux couches adjacentes (2, 3, 4, 5, 6, 7, 8), et **en ce que** chaque couche (2, 3, 4, 5, 6, 7, 8) comprend au moins une fibre dont la longueur est sensiblement comprise entre 1 mm et 20 cm et dont le diamètre est sensiblement compris entre 2 et 500 $\mu$m, chaque couche (2, 3, 4, 5, 6, 7, 8) comprenant au moins une fibre de granulométrie sensiblement différente de celle de la fibre de la couche (2, 3, 4, 5, 6, 7, 8) qui lui est adjacente, de telle sorte que le matériau (1) présente un gradient de granulométrie entre sa première et sa dernière couche (2, 8).

**6.** - Matériau de protection et/ou de combustion (1) selon l'une des revendications précédentes **caractérisé en ce qu'**il comprend une couche extérieure (9) présentant une épaisseur sensiblement comprise entre 1 et 20 mm, de préférence sensiblement égale à 5 mm, ladite couche extérieure (9) présentant une rigidité sensiblement supérieure à celle desdites première et deuxième couches (2, 3), de manière à ce que le matériau présente un gradient de rigidité entre la couche extérieure (9) et lesdites première et deuxième couches (2, 3).

**7.** - Matériau de protection et/ou de combustion (1) selon l'une des revendications précédentes **caractérisé en ce que** la quantité massique de fibres contenue dans le matériau de protection et/ou de combustion (1) est sensiblement comprise entre 5 et 85 %, de préférence sensiblement comprise entre 10 et 25 %, de préférence sensiblement égale à 17 %.

**8.** - Matériau de protection et/ou de combustion (1) selon l'une des revendications précédentes **caractérisé en ce qu'**il constitue un matériau de protection et/ou de combustion (1) majoritairement biodégradable, de préférence intégralement biodégradable.

**9.** - Matériau de protection et/ou de combustion (1) selon l'une des revendications précédentes **caractérisé en ce qu'**il constitue un matériau composite de construction conçu pour l'isolation thermique des bâtiments, ou un matériau d'emballage et/ou de calage, ou un matériau de recouvrement protecteur conçu pour être utilisé dans le domaine des classeurs de rangement, un matériau de chauffage destiné à être utilisé en tant que combustible.

**10.** - Matériau de protection et/ou de combustion (1) selon l'une des revendications précédentes **caractérisé en ce qu'**il est intégralement naturel.

**11.** -Procédé de fabrication d'un matériau de protection et/ou de combustion, notamment de protection thermique et/ou de protection contre des chocs ou des dégradations, comprenant une première étape de fabrication d'au moins une première couche (2) composée d'au moins une première fibre et une deuxième étape de fabrication d'au moins une deuxième couche (3) composée d'au moins une deuxième fibre, lesdites première et deuxième couches (2, 3) étant destinées à remplir, au moins en partie, une fonction de protection et/ou de combustion, ledit procédé étant **caractérisé en ce qu'**il comprend une étape d'établissement de liaisons chimiques directes entre lesdites première et deuxième fibres au niveau d'une zone de contact (20) entre ces dernières, de manière à maintenir ensemble lesdites première et deuxième couches (2, 3), la deuxième fibre étant déposée directement sur la première couche (2), les première et deuxième fibres desdites première et deuxième couches d'isolation (2, 3) étant mises en contact, au moins en partie, au niveau d'une zone d'interface entre lesdites première et deuxième couches (2, 3) correspondant à la zone de contact (20), sans l'utilisation de couche de colle intermédiaire ni d'agent compatibilisant entre lesdites couches (2, 3), et **en ce que** la première étape de fabrication de la première couche (2) comprend une première opération d'hydratation de ladite première fibre, et postérieurement à l'opération d'hydratation de ladite première fibre, une première opération de compression de ladite première fibre, et postérieurement à l'opération de compression de ladite première fibre, une première étape de séchage de ladite première couche (2).

**12.** - Procédé de fabrication d'un matériau de protection et/ou de combustion (1) selon la revendication précédente **caractérisé en ce que** la deuxième étape de fabrication de la deuxième couche (3) comprend, postérieurement à l'étape de fabrication de la première couche (2), sensiblement les mêmes opérations que celles pour la fabrication de ladite première couche, à savoir une deuxième opération d'hydratation, une deuxième opération de compression et une deuxième opération de séchage, la deuxième opération de compression faisant intervenir une force de compression sensiblement inférieure à celle appliquée dans la première opération de compression.

**13.** - Procédé de fabrication d'un matériau de protection et/ou de combustion (1) selon la revendication 12 **caractérisé en ce qu'**il comprend, préalablement à la première étape de fabrication de la première couche (2), une étape de fabrication d'une couche extérieure (9) présentant une rigidité sensiblement supérieure à celle desdites premières et deuxième couches (2, 3), de manière à ce que le matériau de protection et/ou de combustion (1) présente un gradient de rigidité entre la couche extérieure (9) et lesdites première et deuxième couches (2, 3).

**14.** - Procédé de fabrication d'un matériau de protection et/ou de combustion (1) selon l'une des revendications 11 à 13 **caractérisé en ce qu'**il constitue un procédé de fabrication d'un matériau composite de construction conçu pour l'isolation thermique des bâtiments, d'un matériau de protection, d'un matériau d'emballage, d'un matériau de calage, et/ou d'un matériau de recouvrement protecteur conçu pour être utilisé dans le domaine des classeurs de rangement, ou d'un matériau de chauffage destiné à être utilisé en tant que combustible.

**15.** - Procédé de fabrication d'un matériau de protection et/ou de combustion (1) selon l'une des revendications 11 à 14 **caractérisé en ce qu'**il constitue un procédé de fabrication d'un matériau intégralement naturel.

## Patentansprüche

**1.** - Schutz- und/oder Brennmaterial (1), insbesondere für den Wärmeschutz und/oder den Schutz gegen Stöße oder Beschädigungen, das mindestens eine, mindestens eine erste Faser aufweisende erste Schicht (2), und mindestens eine, mindestens eine zweite Faser aufweisende zweite Schicht (3) aufweist, wobei die erste und die zweite Schicht (2, 3) dazu bestimmt sind, zumindest teilweise eine Schutz- und/oder Brennfunktion zu erfüllen, **dadurch gekennzeichnet, dass** die erste und die zweite Faser natürlichen Ursprungs sind und die erste und die zweite Schicht (2, 3) durch Herstellung direkter chemischer Bindungen zwischen der ersten und der zweiten Faser in einem Kontaktbereich (20) zwischen ihnen zusammengehalten sind, wobei die zweite Faser direkt auf der ersten Schicht (2) abgelegt wird, wobei die erste und die zweite Faser der ersten und der zweiten Isolierschicht (2, 3) zumindest teilweise an einer, der Kontaktzone (20) entsprechenden Grenzfläche zwischen der ersten und der zweiten Schicht (2, 3), in Kontakt gebracht werden, ohne dass eine zwischenliegende Klebstoffschicht oder ein Kompatibilisierungsmittel zwischen den Schichten (2, 3) verwendet wird.

**2.** - Schutz- und/oder Brennmaterial (1) nach Anspruch 1, **dadurch gekennzeichnet, dass** die Granulometrie der zweiten Faser wesentlich größer ist als die Granulometrie der ersten Faser, so dass das Material (1) einen Granulometriegradienten zwischen der ersten und zweiten Schicht (2, 3) aufweist.

**3.** - Schutz- und/oder Verbrennungsmaterial (1) nach einem der vorhergehenden Ansprüche, **dadurch gekennzeichnet, dass** die erste Schicht (2) mindestens ein erstes Polysaccharid und die zweite Schicht (3) mindestens ein zweites Polysaccharid umfasst, wobei das erste und das zweite Polysaccharid in der Lage sind, chemische Bindungen miteinander einzugehen, um zur Erhaltung der ersten und zweiten Schicht (2, 3) zwischen ihnen beizutragen.

4. - Schutz- und/oder Verbrennungsmaterial (1) nach dem vorhergehenden Anspruch, **dadurch gekennzeichnet, dass** die chemischen Bindungen schwache Bindungen sind, die zwischen den Hydroxylgruppen der Fasern und/oder den Polysacchariden hergestellt werden.

5. - Schutz- und/oder Brennmaterial (1) nach einem der vorhergehenden Ansprüche, **dadurch gekennzeichnet, dass** es mehr als zwei Schichten (2, 3), vorzugsweise mindestens sieben Schichten (2, 3, 4, 5, 6, 7, 8) umfasst, wobei die Schichten (2, 3, 4, 5, 6, 7, 8) durch die Bildung chemischer Bindungen zwischen den Fasern von mindestens zwei benachbarten Schichten (2, 3, 4, 5, 6, 7, 8) zusammengehalten werden, und dass jede Schicht (2, 3, 4, 5, 6, 7, 8) mindestens eine Faser umfasst, deren Länge im Wesentlichen zwischen 1 mm und 20 cm liegt und deren Durchmesser im Wesentlichen zwischen 2 und 500 pm liegt, wobei jede Schicht (2, 3, 4, 5, 6, 7, 8) mindestens eine Faser mit einer Granulometrie umfasst, die sich wesentlich von derjenigen der Faser der benachbarten Schicht (2, 3, 4, 5, 6, 7, 8) unterscheidet, so dass das Material (1) zwischen seiner ersten und seiner letzten Schicht (2, 8) einen Granulometriegradienten aufweist.

6. - Schutz- und/oder Brennmaterial (1) nach einem der vorhergehenden Ansprüche, **dadurch gekennzeichnet, dass** es eine äußere Schicht (9) mit einer Dicke im Wesentlichen zwischen 1 und 20 mm, vorzugsweise im Wesentlichen gleich 5 mm, umfasst, wobei die äußere Schicht (9) eine Steifigkeit aufweist, die wesentlich größer ist als die der ersten und zweiten Schicht (2, 3), so dass das Material einen Steifigkeitsgradienten zwischen der äußeren Schicht (9) und der ersten und zweiten Schicht (2, 3) aufweist.

7. - Schutz- und/oder Verbrennungsmaterial (1) nach einem der vorhergehenden Ansprüche, **dadurch gekennzeichnet, dass** die Massenmenge an Fasern, die in dem Schutz- und/oder Verbrennungsmaterial (1) enthalten ist, im Wesentlichen zwischen 5 und 85 %, vorzugsweise im Wesentlichen zwischen 10 und 25 %, besonders bevorzugt im Wesentlichen gleich 17 %, liegt.

8. - Schutz- und/oder Brennmaterial (1) nach einem der vorhergehenden Ansprüche, **dadurch gekennzeichnet, dass** es ein überwiegend biologisch abbaubares, vorzugsweise vollständig biologisch abbaubares Schutz- und/oder Brennmaterial (1) ist.

9. - Schutz- und/oder Brennmaterial (1) nach einem der vorhergehenden Ansprüche, **dadurch gekennzeichnet, dass** es sich um einen Verbundwerkstoff für die Wärmedämmung von Gebäuden oder um ein Verpackungs- und/oder Polstermaterial oder um ein Schutzabdeckungsmaterial zur Verwendung im Bereich von Aktenschränken oder um ein Heizmaterial zur Verwendung als Brennstoff handelt.

10. - Schutz- und/oder Brennmaterial (1) nach einem der vorhergehenden Ansprüche, **dadurch gekennzeichnet, dass** es vollständig natürlich ist.

11. - Verfahren zur Herstellung eines Schutz- und/oder Brennmaterials, insbesondere für den Wärmeschutz und/oder den Schutz gegen Stöße oder Beschädigungen, umfassend einen ersten Schritt zur Herstellung mindestens einer ersten Schicht (2), die aus mindestens einer ersten Faser besteht, und einen zweiten Schritt zur Herstellung mindestens einer zweiten Schicht (3), die aus mindestens einer zweiten Faser besteht, wobei die erste und die zweite Schicht (2, 3) dazu bestimmt sind, zumindest teilweise eine Schutz- und/oder Brennfunktion zu erfüllen, wobei das Verfahren **dadurch gekennzeichnet ist, dass** es einen Schritt der Herstellung direkter chemischer Verbindungen zwischen der ersten und der zweiten Faser in einer Kontaktzone (20) zwischen diesen letzteren umfasst, um die erste und die zweite Schicht (2, 3) zusammenzuhalten, wobei die zweite Faser direkt auf die erste Schicht (2) aufgebracht wird, wobei die erste und die zweite Faser der ersten und der zweiten Isolierschicht (2, 3) zumindest teilweise in einem Grenzflächenbereich zwischen der ersten und der zweiten Schicht (2, 3), der dem Kontaktbereich (20) entspricht, in Kontakt gebracht werden, ohne dass eine zwischenliegende Klebeschicht oder ein Kompatibilisierungsmittel zwischen den Schichten (2, 3) verwendet wird, und dass der erste Schritt der Herstellung der ersten Schicht (2) einen ersten Vorgang des Hydratisierens der ersten Faser und im Anschluss an den Vorgang des Hydratisierens der ersten Faser einen ersten Vorgang des Verdichtens der ersten Faser und im Anschluss an den Vorgang des Verdichtens der ersten Faser einen ersten Schritt des Trocknens der ersten Schicht (2) umfasst.

12. - Verfahren zur Herstellung eines Schutz- und/oder Brennmaterials (1) nach dem vorhergehenden Anspruch, **dadurch gekennzeichnet, dass** der zweite Schritt der Herstellung der zweiten Schicht (3) nach dem Schritt der Herstellung der ersten Schicht (2) im Wesentlichen die gleichen Vorgänge wie bei der Herstellung der ersten Schicht umfasst, nämlich einen zweiten Hydratationsvorgang, einen zweiten Kompressionsvorgang und einen zweiten Trocknungsvorgang, wobei der zweite Kompressionsvorgang eine Kompressionskraft beinhaltet, die wesentlich geringer ist als die im ersten Kompressionsvorgang angewandte.

13. - Verfahren zur Herstellung eines Schutz- und/oder Brennmaterials (1) nach Anspruch 12, **dadurch gekennzeichnet, dass** es vor dem ersten Schritt der Herstellung der ersten Schicht (2) einen Schritt der Herstellung einer Außenschicht (9) mit einer Steifigkeit umfasst, die wesentlich größer ist als die der ersten und zweiten Schicht (2, 3), so dass das Schutz- und/oder Brennmaterial (1) einen Steifigkeitsgradienten zwischen der Außenschicht (9) und der ersten und zweiten Schicht (2, 3) aufweist.

14. - Verfahren zur Herstellung eines Schutz- und/oder Brennmaterials (1) nach einem der Ansprüche 11 bis 13, **dadurch gekennzeichnet, dass** es ein Verfahren zur Herstellung eines Verbundbaustoffs für die Wärmedämmung von Gebäuden, eines Schutzmaterials, eines Verpackungsmaterials, eines Polstermaterials und/oder eines Schutzabdeckungsmaterials für die Verwendung im Bereich von Aktenschränken oder eines Heizmaterials für die Verwendung als Brennstoff ist.

15. - Verfahren zur Herstellung eines Schutz- und/oder Brennmaterials (1) nach einem der Ansprüche 11 bis 14, **dadurch gekennzeichnet, dass** es sich um ein Verfahren zur Herstellung eines vollständig natürlichen Materials handelt.

## Claims

1. A protection and/or combustion material (1), in particular for thermal protection and/or protection against impacts or degradations, comprising at least one first layer (2) composed of at least one first fiber and at least one second layer (3) composed of at least one second fiber, said first and second layers (2, 3) being intended to perform, at least partially, a protection and/or combustion function, **characterized in that** said first and second fibers are of natural origin and the first and second layers (2, 3) are held together by establishing direct chemical bonds between said first and second fibers at a contact area (20) therebetween, the second fiber being deposited directly over the first layer (2), the first and second fibers of said first and second insulation layers (2, 3) being brought into contact, at least partially, at an interface area between said first and second layers (2, 3) corresponding to the contact area (20), without the use of an intermediate adhesive layer or of a compatibilizer between said layers (2, 3).

2. The protection and/or combustion material (1) according to claim 1, **characterized in that** the grain-size of the second fiber is substantially greater than the grain-size of the first fiber, such that said material (1) has a grain-size gradient between said first and second layers (2, 3).

3. The protection and/or combustion material (1) according to any of the preceding claims, **characterized in that** the first layer (2) comprises at least one first polysaccharide and the second layer (3) comprises at least one second polysaccharide, said first and second polysaccharides being capable of establishing chemical bonds therebetween in order to contribute to holding of said first and second layers (2, 3) together.

4. The protection and/or combustion material (1) according to the preceding claim, **characterized in that** the chemical bonds are weak bonds that are formed between the hydroxyl groups of the fibers and/or of the polysaccharides.

5. The protection and/or combustion material (1) according to any of the preceding claims, **characterized in that** it comprises more than two layers (2, 3), preferably at least seven layers (2, 3, 4, 5, 6, 7, 8), said layers (2, 3, 4, 5, 6, 7, 8) being held together by forming of chemical bonds between the fibers of at least two adjacent layers (2, 3, 4, 5, 6, 7, 8), and **in that** each layer (2, 3, 4, 5, 6, 7, 8) comprises at least one fiber the length of which is substantially comprised between 1 mm and 20 cm and the diameter of which is substantially between 2 and 500 μm, each layer (2, 3, 4, 5, 6, 7, 8) comprising at least one fiber with a grain-size substantially different from that of the fiber of the layer (2, 3, 4, 5, 6, 7, 8) that is adjacent thereto, such that the material (1) has a grain-size gradient between its first and its last layer (2, 8).

6. The protection and/or combustion material (1) according to any of the preceding claims, **characterized in that** it comprises an external layer (9) having a thickness substantially comprised between 1 and 20 mm, preferably substantially equal to 5 mm, said external layer (9) having a stiffness substantially greater than that of said first and second layers (2, 3), so that the material has a stiffness gradient between the external layer (9) and said first and second layers (2, 3).

7. The protection and/or combustion material (1) according to any of the preceding claims, **characterized in that** the mass amount of fibers contained in the protection and/or combustion material (1) is substantially comprised between 5 and 85 %, preferably substantially comprised between 10 and 25 %, preferably substantially equal to 17 %.

**8.** The protection and/or combustion material (1) according to any of the preceding claims, **characterized in that** it constitutes a protection and/or combustion material (1) predominantly biodegradable, preferably fully biodegradable.

**9.** The protection and/or combustion material (1) according to any of the preceding claims, **characterized in that** it constitutes a construction composite material designed for the thermal insulation of buildings, or a packaging and/or cushioning material, or a protective covering material designed for use in the field of storage binders, a heating material for use as a fuel.

**10.** The protection and/or combustion material (1) according to any of the preceding claims, **characterized in that** it is completely natural.

**11.** A method for manufacturing a protection and/or combustion material, in particular for thermal protection and/or protection against impacts or degradations, comprising a first step of manufacturing at least one first layer (2) composed of at least one first fiber and a second step of manufacturing at least one second layer (3) composed of at least one second fiber, said first and second layers (2, 3) being intended to perform, at least partially, a protection and/or combustion function, said method being **characterized in that** it comprises a step of forming direct chemical bonds between said first and second fibers at a contact area (20) therebetween, so as to hold said first and second layers (2, 3) together, the second fiber being deposited directly over the first layer (2), the first and second fibers of said first and second insulation layers (2, 3) being put in contact, at least partially, at an interface area between said first and second layers (2, 3) corresponding to the contact area (20), without the use of an intermediate adhesive layer or of a compatibilizer between said layers (2, 3), and **in that** the first step of manufacturing the first layer (2) comprises a first operation of hydration of said first fiber, and subsequently to the operation of hydration of said first fiber, a first operation of compressing said first fiber, and subsequently to the operation of compressing said first fiber, a first step of drying said first layer (2).

**12.** The method for manufacturing a protection and/or combustion material (1) according to the preceding claim, **characterized in that** the second step of manufacturing the second layer (3) comprises, subsequently to the step of manufacturing the first layer (2), substantially the same operations as those for the manufacture of said first layer, namely a second hydration operation, a second compression operation and a second drying operation, the second compression operation involving a compression force substantially less than that applied in the first compression operation.

**13.** The method for manufacturing a protection and/or combustion material (1) according to claim 12, **characterized in that** it comprises, prior to the first step of manufacturing the first layer (2), a step of manufacturing an external layer (9) having a stiffness substantially greater than that of said first and second layers (2, 3), so that the protection and/or combustion material (1) has a stiffness gradient between the outer external layer (9) and said first and second layers (2, 3).

**14.** The method for manufacturing a protection and/or combustion material (1) according to any of claims 11 to 13, **characterized in that** it constitutes a method for manufacturing a construction composite material designed for the thermal insulation of buildings, a protection material, a packaging material, a cushioning material, and/or a protective covering material designed for use in the field of storage binders, or a heating material intended for use as a fuel.

**15.** The method for manufacturing a protection and/or combustion material (1) according to any of claims 11 to 14, **characterized in that** it constitutes a method for manufacturing a completely natural material.

20
1
1B
1A
2
3
FIG.1
10
1
1B
1A
8
2
7
3 4 5 6
FIG.2
10
1
1B
1A
8
7
9
6
2 3 4 5
FIG.3
1
1B
10
1A
FIG.4
1
10
9
1A
FIG.5
35
$T_3$
$T_1$
33
$T_2$
32A
32
34B
34
30
34A
$T_4$
31
FIG.6